# EUROPÄISCHE PATENTANMELDUNG

(11) **EP 2 164 179 A2**
(43) Veröffentlichungstag der Anmeldung: **17.03.2010**
(21) Anmeldenummer: 09168647.7
(22) Anmeldetag: 26.08.2009
(51) Int. Cl.: H04B 1/16, H04W 52/02

(54) **Verfahren zum Aktivieren eines elektrischen Gerätes sowie elektrisches Gerät und Anordnung**

(30) Priorität: 10.09.2008 DE 102008047246
(71) Anmelder: Siemens Aktiengesellschaft, 80333 München (DE)
(72) Erfinder: Faubel, Peter, Dr., 38154 Königslutter (DE); Windolf, Wolfgang, 38179 Schwülper (DE)

(57) **Zusammenfassung**

Die Erfindung betrifft ein Verfahren zum Aktivieren eines elektrischen Gerätes, wobei
- von dem elektrischen Gerät innerhalb eines in einem ersten Zeitabstand (ZA1) regelmäßig wiederkehrenden Zeitfensters (ZF), in dem das elektrische Gerät empfangsbereit ist, über eine Funkschnittstelle ein erstes Aktivierungssignal (AS1) empfangen wird,
- auf das erste Aktivierungssignal (AS1) hin der zeitliche Abstand der Zeitfenster (ZF) auf einen im Vergleich zum ersten Zeitabstand (ZA1) kürzeren zweiten Zeitabstand (ZA2) eingestellt wird,
- von dem elektrischen Gerät innerhalb eines der nun in dem zweiten Zeitabstand (ZA2) regelmäßig wiederkehrenden Zeitfenster (ZF) über die Funkschnittstelle ein zweites Aktivierungssignal (AS2) empfangen wird und
- das elektrische Gerät auf das zweite Aktivierungssignal (AS2) hin aktiviert wird.

Die Erfindung betrifft weiterhin ein elektrisches Gerät sowie eine Anordnung.

## Beschreibung

In der Praxis besteht häufig die Anforderung, zu einem bestimmten Zeitpunkt eine Aktivierung eines elektrischen Gerätes vorzunehmen. Dies betrifft insbesondere solche elektrischen Geräte, deren Energieversorgung durch einen begrenzten Energiespeicher gewährleistet wird, und die daher erst zu dem Zeitpunkt aktiviert werden sollen, zu dem die Funktionalität des elektrischen Gerätes tatsächlich benötigt wird.

Als Beispiel für eine solche Situation beziehungsweise ein solches elektrisches Gerät sei im Folgenden der Fall eines elektrischen Gerätes in Form eines Telematikgerätes näher betrachtet. Telematikgeräte werden im Rahmen von so genannten Telematiklösungen an einem bewegten Objekt angebracht und werden beispielsweise zur Laufwegeverfolgung und Überwachung von Güterwagen des spurgeführten Verkehrs eingesetzt. Ein Telematikgerät umfasst hierbei üblicherweise eine Übertragungseinrichtung, die zur Datenübertragung, beispielsweise mittels SMS (Short Message Service), von dem Güterwagen über ein Mobilfunknetz an eine Zentrale dient. Darüber hinaus kann ein Telematikgerät auch weitere Komponenten aufweisen, wie beispielsweise ein Satellitenortungsgerät, welches es dem Telematikgerät ermöglicht, seine eigene Position und damit auch die Position des Objektes, an dem es angebracht ist, das heißt beispielsweise des Güterwagens, präzise zu ermitteln. Eine Übertragung dieser Information an die Zentrale ermöglicht beispielsweise eine Überwachung des Aufenthaltsortes sowie des Laufweges des Güterwagens. Ein elektrisches Gerät in Form eines solche Telematikgerätes zur Verwendung an Güterwagen des spurgeführten Verkehrs ist beispielsweise aus dem Artikel "Intelligent wagons will build on consignment tracking", Railway Gazette International, May 2008, Seiten 305 bis 306 bekannt.

Insbesondere für den Einsatz an Güterwagen besteht die Anforderung, dass ein Telematikgerät energieautark ist, das heißt über einen möglichst langen Zeitraum wartungsfrei ohne zusätzliche externe Energiezufuhr betrieben werden kann. Um dies zu gewährleisten, weisen Telematikgeräte üblicherweise entsprechend leistungsfähige Batterien auf. Aufgrund ihrer Anbringung außen an Güterwagen oder beispielsweise auch an LKW-Wechselbrücken oder Containern müssen Telematikgeräte eine hohe Schutzklasse aufweisen, damit bei langjährigem Betrieb unter wechselnden Umwelteinflüssen keine Feuchtigkeit eindringen kann, die zu einer Zerstörung des Gerätes führen könnte. Um das Eindringen von Feuchtigkeit zu verhindern sowie darüber hinaus einen Schutz gegen äußere mechanische Einwirkungen zu bieten, weisen Telematikgeräte üblicherweise ein hermetisch abgeschlossenes, dichtes Gehäuse auf. Entsprechende Telematikgeräte werden auch als Telematikbox bezeichnet.

Beispielsweise bei elektrischen Geräten in Form solcher Telematikgeräte besteht nun in der Praxis das Problem, dass es aufgrund des verwendeten hermetisch abgeschlossenen Gehäuses in der Regel nicht möglich ist, das elektrische Gerät erst bei Bedarf, beispielsweise mittels eines Schalters, zu aktivieren. Ähnliches gilt für den Fall, dass eine Zugänglichkeit des elektrischen Gerätes zum Zeitpunkt seiner vorgesehenen Aktivierung nicht gegeben ist. Dies kann beispielsweise dann der Fall sein, wenn das elektrische Gerät im Inneren einer Industrieanlage oder in einem sonstigen nicht zugänglichen Bereich angeordnet ist. Wird das Telematikgerät aufgrund einer solchen Situation bereits bei der Fertigung aktiviert, so weist dies den Nachteil auf, dass bereits vor dem eigentlichen Betrieb, das heißt beispielsweise während einer der Montage und der anschließenden bestimmungsgemäßen Verwendung des elektrischen Gerätes vorangehenden Lagerung, Zwischenlagerung oder eines Transports, zumindest ein Teil des in Form der Batterie mitgeführten Energievorrats aufgebraucht wird. Dies führt somit zu einer Verkürzung der nutzbaren Betriebszeit des elektrischen Gerätes.

Der vorliegenden Erfindung liegt die Aufgabe zugrunde, ein Verfahren zum Aktivieren eines elektrischen Gerätes anzugeben, das es ermöglicht, das elektrische Gerät auf vergleichsweise einfache und zugleich kostengünstige Art und Weise erst bei Bedarf zu aktivieren.

Diese Aufgabe wird erfindungsgemäß gelöst durch ein Verfahren zum Aktivieren eines elektrischen Gerätes, wobei von dem elektrischen Gerät innerhalb eines in einem ersten Zeitabstand regelmäßig wiederkehrenden Zeitfensters, in dem das elektrische Gerät empfangsbereit ist, über eine Funkschnittstelle ein erstes Aktivierungssignal empfangen wird, auf das erste Aktivierungssignal hin der zeitliche Abstand der Zeitfenster auf einen im Vergleich zum ersten Zeitabstand kürzeren zweiten Zeitabstand eingestellt wird, von dem elektrischen Gerät innerhalb eines der nun in dem zweiten Zeitabstand regelmäßig wiederkehrenden Zeitfenster über die Funkschnittstelle ein zweites Aktivierungssignal empfangen wird und das elektrische Gerät auf das zweite Aktivierungssignal hin aktiviert wird.

Das erfindungsgemäße Verfahren ist vorteilhaft, da es ermöglicht, dass das elektrische Gerät in der Fertigung bereits komplett, das heißt insbesondere inklusive Energieversorgung, zusammengesetzt wird. Vorteilhafterweise wird hierbei der zeitliche Abstand des regelmäßig wiederkehrenden Zeitfensters, in dem das elektrische Gerät empfangsbereit ist, auf einen ersten, vergleichsweise langen Zeitabstand eingestellt. Dies ist zweckmäßig, da das elektrische Gerät zunächst noch ausgeliefert werden muss beziehungsweise häufig im Werk oder beispielsweise auch beim Kunden zwischengelagert wird. Aufgrund des vergleichsweise langen ersten Zeitabstands, der beispielsweise in der Größenordnung von Stunden oder Tagen liegen kann, wird der Energiebedarf des elektrischen Gerätes während dieser Zeit minimiert. Ein entsprechend vergleichsweise träges Verhalten des elektrischen Gerätes hinsichtlich seiner Empfangsbereitschaft und damit auch hinsichtlich seiner Aktivierbarkeit wird hierbei bewusst in Kauf genommen.

Gemäß dem ersten Verfahrensschritt des erfindungsgemäßen Verfahrens wird von dem elektrischen Gerät innerhalb des in dem ersten Zeitabstand regelmäßig wiederkehrenden Zeitfensters, in dem das elektrische Gerät empfangsbereit ist, über eine Funkschnittstelle ein erstes Aktivierungssignal empfangen. Auf dieses erste Aktivierungssignal hin wird sodann der zeitliche Abstand der Zeitfenster auf einem im Vergleich zum ersten Zeitabstand kürzeren zweiten Zeitabstand eingestellt. Dies bedeutet, dass das elektrische Gerät in der Folge in kürzeren Zeitabständen empfangsbereit ist, die beispielsweise im Minuten- oder auch Sekundenbereich liegen können. Ein entsprechendes erstes Aktivierungssignal kann beispielsweise dann ausgelöst werden, wenn die Montage des elektrischen Gerätes ansteht, das heißt beispielsweise im Falle eines elektrischen Gerätes in Form eines Telematikgerätes eine Montage an einen Güterwagen vorgesehen ist.

Sofern nicht genau bekannt ist, wann das elektrische Gerät das nächste Mal empfangsbereit sein wird, so besteht die Möglichkeit, über einen entsprechenden "Aufweckzeitraum", dessen erforderliche Länge maximal dem ersten Zeitabstand entspricht, das erste Aktivierungssignal an das elektrische Gerät zu senden. Mit dem nächsten regelmäßig wiederkehrenden Zeitfenster, in dem das elektrische Gerät empfangsbereit ist, wird das erste Aktivierungssignal von dem elektrischen Gerät empfangen, woraufhin der zeitliche Abstand der Zeitfenster auf den kürzeren zweiten Zeitabstand eingestellt wird. Dies bietet den Vorteil, dass hierdurch die Reaktionszeit des elektrischen Gerätes in Vorbereitung seiner endgültigen Aktivierung auf geeignete kurze Werte eingestellt wird. Das Aussenden des ersten Aktivierungssignals kann beispielsweise über ein an einem für ein oder mehrere elektrische Geräte verwendeten Transport- oder Lagerbehälter angebrachtes Aktivierungs- beziehungsweise Fern-Parametriergerät erfolgen.

Nachdem nun beispielsweise die Montage des elektrischen Gerätes abgeschlossen ist, wird gemäß dem erfindungsgemäßen Verfahren von dem elektrischen Gerät innerhalb eines der nun in dem zweiten Zeitabstand regelmäßig wiederkehrenden Zeitfenster über die Funkschnittstelle ein zweites Aktivierungssignal empfangen. Auf dieses zweite Aktivierungssignal hin wird das elektrische Gerät schließlich aktiviert. Dabei bedeutet das Aktivieren des elektrischen Gerätes insbesondere, dass das elektrische Gerät in einen Zustand versetzt wird, indem es seine volle Funktionalität bereitstellt. Im Falle eines elektrischen Gerätes in Form eines Telematikgerätes bedeutet dies beispielsweise, dass das Telematikgerät seinen üblichen Betrieb beginnt, das heißt beispielsweise in regelmäßigen zeitlichen Abständen seine ermittelte Position über eine Funkverbindung an eine Zentrale meldet.

Es sei darauf hingewiesen, dass es sich bei der im Rahmen des erfindungsgemäßen Verfahrens verwendeten Funkschnittstelle um eine Funkschnittstelle beliebiger Art handeln kann. Dies schließt neben Funkschnittstellen zur Verwendung in Kommunikationsnetzen beispielsweise gemäß den Standards GSM (Global System for Mobile Communication), GPRS (General Packet Radio Service), UMTS (Universal Mobile Telecommunications System) oder WLAN (Wireless Local Area Network) insbesondere auch Funkschnittstellen mit vergleichsweise kurzer Reichweite wie beispielsweise Bluetooth oder IEEE 802.15.4 ein.

Das erfindungsgemäße Verfahren bietet den Vorteil, dass eine vorzeitige Aktivierung des elektrischen Gerätes, die mit einem entsprechenden Energieverbrauch verbunden wäre, vermieden wird. Darüber hinaus kann auf zusätzliche Komponenten für das elektrische Gerät verzichtet werden, mit denen in der Regel entsprechende zusätzliche Kosten verbunden wären. So wäre es beispielsweise grundsätzlich auch denkbar, das elektrische Gerät mittels eines magnetisch betätigten Reed-Kontakts zu aktivieren. In diesem Fall wäre ein entsprechender Kontakt jedoch ausschließlich für eine in der Regel lediglich einmalig stattfindende Aktivierung erforderlich. Mittels des zweistufigen erfindungsgemäßen Aktivierungsverfahrens werden nicht nur zusätzliche Komponenten seitens des elektrischen Gerätes vermieden, sondern darüber hinaus erfolgt die Aktivierung auch auf vergleichsweise einfache und ohne beziehungsweise mit lediglich geringen Beschränkungen einhergehende Art und Weise.

Bei dem elektrischen Gerät kann es sich grundsätzlich um ein elektrisches Gerät beliebiger Art handeln. Erforderlich ist hierbei lediglich, dass das elektrische Gerät eine Funkschnittstelle zum Empfangen des ersten sowie des zweiten Aktivierungssignals aufweist. In einer besonders bevorzugten Weiterbildung des erfindungsgemäßen Verfahrens wird ein elektrisches Gerät in Form eines Telematikgerätes oder eines Funksensors aktiviert. Entsprechend den vorstehenden diesbezüglichen Ausführungen besteht insbesondere bei energieautarken Telematikgeräten ein erhebliches Bedürfnis dafür, ein einfaches und kostengünstiges Aktivierungsverfahren zur Verfügung zu haben, welches einen unnötigen Energieverbrauch vor der eigentlichen Inbetriebnahme des elektrischen Gerätes in Form des Telematikgerätes vermeidet. Dies gilt entsprechend auch für Funksensoren, die üblicherweise ebenfalls durch zumindest eine Batterie versorgt werden. Im Bereich der Eisenbahntechnik können entsprechende Funksensoren beispielsweise zur Beladungsüberwachung, zur Temperaturüberwachung oder auch zur Überwachung des Öffnungszustands einer Tür eines Güterwagens eingesetzt werden. Darüber hinaus finden Funksensoren jedoch auch in vielen anderen technischen Gebieten, wie beispielsweise auch im Bereich der Automatisierungstechnik oder der Medizintechnik, zunehmende Verbreitung. Dabei können die Funksensoren zur Datenübertragung über ein beliebiges Funknetz ausgebildet sein. Als Beispiele für hierbei verwendbare Funktechnologien sei auf die vorstehend im Zusammenhang mit der Funkschnittstelle des elektrischen Gerätes genannten Beispiele verwiesen.

In einer weiteren bevorzugten Ausführungsform des erfindungsgemäßen Verfahrens wird mit oder nach dem Empfang des zweiten Aktivierungssignals eine Fern-Parametrierung des elektrischen Gerätes vorgenommen. Dies betrifft insbesondere den Fall, dass Konfigurationsparameter des elektrischen Gerätes vor Aufnahme des eigentlichen Betriebs mittels der Fern-Parametrierung beispielsweise kunden- oder situationsspezifisch angepasst werden sollen. Im Falle eines elektrischen Gerätes in Form eines Telematikgerätes kann es sich bei mittels der Fern-Parametrierung einzustellenden oder zu ändernden Daten beziehungsweise Parametern beispielsweise um die Zeitpunkte einer Positionsermittlung, die Zeitdauer, in welcher eine Positionsermittlung durchgeführt beziehungsweise versucht werden soll, die erforderliche Genauigkeit der Positionsermittlung sowie eine Angabe zu gegebenenfalls zusätzlich zu aktivierenden Sensoren handeln. Eine entsprechende Fern-Parametrierung kann dabei unmittelbar zusammen mit dem zweiten Aktivierungssignal oder gegebenenfalls auch erst nach dem Empfangen des zweiten Aktivierungssignals, das heißt nach bereits erfolgter Aktivierung des elektrischen Gerätes, erfolgen.

In einer weiteren besonders bevorzugten Ausführungsform ist das erfindungsgemäße Verfahren derart ausgestaltet, dass die Zeitfenster, in denen das elektrische Gerät für das erste Aktivierungssignal empfangsbereit ist, durch ein von dem elektrischen Gerät ausgesendetes Heartbeat-Telegramm angezeigt werden. Dies bietet den Vorteil, dass seitens einer das erste Aktivierungssignal aussendenden Vorrichtung erkannt werden kann, dass ein im Folgenden ausgesendetes erstes Aktivierungssignal aufgrund bestehender Empfangsbereitschaft von dem elektrischen Gerät empfangen werden wird. Hierdurch wird es vorteilhafterweise vermieden, dass seitens der Vorrichtung das erste Aktivierungssignal wiederholt über einen längeren Zeitraum ausgestrahlt werden muss, bevor es bei dem nächsten regelmäßig wiederkehrenden Zeitfenster, in dem das elektrische Gerät empfangsbereit ist, von diesem empfangen werden kann.

Vorzugsweise kann das erfindungsgemäße Verfahren auch derart weitergebildet sein, dass die Verfügbarkeit des elektrischen Gerätes anhand der ausgesendeten Heartbeat-Telegramme überwacht wird. Neben der Anzeige der Zeitfenster, in denen das elektrische Gerät für das erste Aktivierungssignal empfangsbereit ist, können die Heartbeat-Telegramme vorteilhafterweise auch für eine Überwachung der Verfügbarkeit des elektrischen Gerätes verwendet werden. Dies betrifft einerseits die Präsenz des elektrischen Gerätes, so dass etwa im Falle einer Vielzahl gelagerter elektrischer Geräte die Vollständigkeit des Bestandes überprüft werden kann. Darüber hinaus ist es auch denkbar, dass das Heartbeat-Telegramm zusätzliche Informationen beispielsweise hinsichtlich des Energiestatus des elektrischen Gerätes enthält. Hierdurch wird es ermöglicht, solche elektrischen Geräte bei einer Auslieferung zu bevorzugen, die bei einer längeren Lagerzeit eine geforderte Mindestbetriebsdauer nicht mehr garantieren könnten.

Die Erfindung betrifft des Weiteren ein elektrisches Gerät.

Hinsichtlich des elektrischen Gerätes liegt der vorliegenden Erfindung die Aufgabe zugrunde, ein elektrisches Gerät anzugeben, das ein Verfahren unterstützt, das es ermöglicht, das elektrische Gerät auf vergleichsweise einfache und zugleich kostengünstige Art und Weise erst bei Bedarf zu aktivieren.

Diese Aufgabe wird erfindungsgemäß gelöst durch ein elektrisches Gerät mit einer Funkschnittstelle zum Empfangen von Funksignalen innerhalb von in definierten Zeitabständen regelmäßig wiederkehrenden Zeitfenstern, in denen das elektrische Gerät empfangsbereit ist, und einer Steuereinrichtung zum Einstellen des zeitlichen Abstands der Zeitfenster auf einen im Vergleich zum vorherigen ersten Zeitabstand kürzeren zweiten Zeitabstand auf ein über die Funkschnittstelle empfangenes erstes Aktivierungssignal hin und zum Aktivieren des elektrischen Gerätes auf ein von dem elektrischen Gerät innerhalb eines der in dem zweiten Zeitabstand regelmäßig wiederkehrenden Zeitfenster über die Funkschnittstelle empfangenes zweites Aktivierungssignal hin.

Die Vorteile des erfindungsgemäßen elektrischen Gerätes entsprechen im Wesentlichen denjenigen des erfindungsgemäßen Verfahrens, so dass diesbezüglich auf die entsprechenden vorstehenden Ausführungen verwiesen wird. Gleiches gilt in Bezug auf die im Folgenden genannten bevorzugten Weiterbildungen des erfindungsgemäßen elektrischen Gerätes hinsichtlich der entsprechenden zuvor beschriebenen bevorzugten Weiterbildungen des erfindungsgemäßen Verfahrens.

In einer besonders bevorzugten Weiterbildung des elektrischen Gerätes ist das elektrische Gerät ein Telematikgerät oder ein Funksensor.

Vorzugsweise kann das erfindungsgemäße elektrische Gerät auch derart ausgeprägt sein, dass es zum Durchführen einer Fern-Parametrierung vorgesehen ist.

In einer weiteren besonders bevorzugten Ausführungsform ist das erfindungsgemäße elektrische Gerät derart ausgestaltet, dass es zum Aussenden eines die Zeitfenster, in denen das elektrische Gerät für das erste Aktivierungssignal empfangsbereit ist, anzeigenden Heartbeat-Telegramms ausgebildet ist.

Die Erfindung umfasst darüber hinaus eine Anordnung mit zumindest einem erfindungsgemäßen elektrischen Gerät beziehungsweise zumindest einem elektrischen Gerät gemäß einer der zuvor beschriebenen bevorzugten Weiterbildungen des erfindungsgemäßen elektrischen Gerätes und einem Aktivierungsgerät zum Aussenden des ersten und/oder des zweiten Aktivierungssignals.

Vorteilhafterweise ist die Anordnung derart ausgestaltet, dass eine Vorrichtung zum Überwachen der Verfügbarkeit des zumindest einen elektrischen Gerätes anhand eines durch das elektrische Gerät ausgesendeten Heartbeat-Telegramms vorgesehen ist.

Im Folgenden wird die Erfindung anhand eines Ausführungsbeispiels näher erläutert. Hierzu zeigt die
- Figur: eine schematische Skizze zur Erläuterung des zeitlichen Ablaufs eines Ausführungsbeispiels des erfindungsgemäßen Verfahrens.

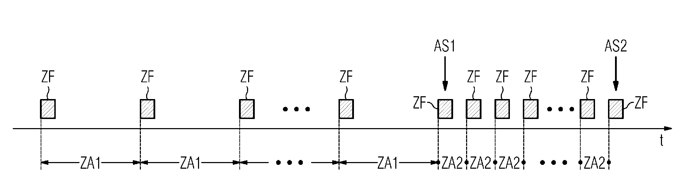

Im Folgenden sei angenommen, dass ein elektrisches Gerät in Form eines Telematikgerätes für einen Güterwagen des spurgeführten Verkehrs aktiviert werden soll. Das elektrische Gerät in Form des Telematikgerätes weist eine Funkschnittstelle auf, wobei das elektrische Gerät innerhalb eines in einem ersten Zeitabstand ZA1 regelmäßig wiederkehrenden Zeitfensters ZF über die Funkschnittstelle empfangsbereit ist. Dies ist in der Figur dargestellt, in der die entsprechenden Zeitfenster ZF als Funktion der Zeit t dargestellt sind.

In dem beschriebenen Ausführungsbeispiel sei angenommen, dass die Zeitfenster ZF eine Länge von ca. 30 s aufweisen und in einem ersten Zeitabstand ZA1 von beispielsweise 10 Stunden regelmäßig wiederkehren. Dies ist in der Figur durch entsprechende Lücken zwischen den Zeitfenstern ZF angedeutet, wobei die Darstellung der Figur aus Gründen der Übersichtlichkeit jedoch in Bezug auf die Länge der Zeitfenster bzw. der einzelnen Zeitabstände nicht maßstabsgetreu ist.

Im Rahmen der Aktivierung des elektrischen Gerätes wird nun von dem elektrischen Gerät innerhalb eines der in dem ersten Zeitabstand ZA1 regelmäßig wiederkehrenden Zeitfenster, in denen das elektrische Gerät empfangsbereit ist, über die Funkschnittstelle ein erstes Aktivierungssignal AS1 empfangen. Dies ist in der Figur durch einen entsprechenden Pfeil angedeutet.

Auf das erste Aktivierungssignal AS1 hin wird der zeitliche Abstand der Zeitfenster ZF, in denen das elektrische Gerät empfangsbereit ist, durch eine Steuereinrichtung des elektrischen Gerätes auf einen im Vergleich zum ersten Zeitabstand ZA1 kürzeren zweiten Zeitabstand ZA2 eingestellt. Im beschriebenen Ausführungsbeispiel sei angenommen, dass der zweite Zeitabstand 60 s beträgt, so dass das elektrische Gerät jeweils in zeitlichen Abständen von 60 s für 30 s empfangsbereit ist. In Abhängigkeit von den jeweiligen Gegebenheiten und Anforderungen wäre es beispielsweise jedoch auch denkbar, den zweiten Zeitabstand größer, das heißt beispielsweise in der Größenordnung von einigen Minuten, oder noch kleiner, das heißt im Extremfall so zu wählen, dass das elektrische Gerät nach Empfang des ersten Aktivierungssignals AS1 durchgehend empfangsbereit wäre.

Im Folgenden wird von dem elektrischen Gerät zu einem Zeitpunkt, der eine beliebige Zeit später als der Empfang des ersten Aktivierungssignals AS1 liegen kann, jedoch in der Regel zweckmäßigerweise einige Stunden oder Tage nach dem Empfang des ersten Aktivierungssignals AS1 liegen wird, innerhalb eines der nun in dem zweiten Zeitabstand ZA2 regelmäßig wiederkehrenden Zeitfenster ZF über die Funkschnittstelle ein zweites Aktivierungssignal AS2 empfangen. Auf dieses zweite Aktivierungssignal AS2 hin wird das elektrische Gerät aktiviert, das heißt die Aktivierung ist abgeschlossen. In dem dem beschriebenen Ausführungsbeispiel zugrundeliegenden Fall eines elektrischen Gerätes in Form eines Telematikgerätes bedeutet dies beispielsweise, dass das Gerät die Bestimmung seiner Position aufnimmt. Darüber hinaus werden alle im aktiven Betrieb des elektrischen Gerätes benötigten beziehungsweise verwendeten Komponenten in einen aktiven Zustand geschaltet. Dies bedeutet, dass der Energieverbrauch des elektrischen Gerätes im Vergleich zu dem der Aktivierung vorangehenden Zustand, in dem lediglich in einem Zeitfenster ZF eine Empfangsbereitschaft des elektrischen Gerätes gegeben war, wobei zumindest ein Großteil der übrigen Komponenten noch nicht benötigt wurde, erhöht ist. So wird für eine Auswertung des empfangenen ersten sowie zweiten Aktivierungssignals, das Einstellen des zeitlichen Abstands zwischen den Zeitfenstern auf dem kürzeren zweiten Zeitabstand sowie das Aktivieren des elektrischen Gerätes auf das zweite Aktivierungssignal hin neben der Funkschnittstelle in der Regel lediglich eine Steuereinrichtung des elektrischen Gerätes, etwa in Form eines Mikroprozessors, benötigt.

Vorteilhafterweise kann mit oder nach dem Empfangen des zweiten Aktivierungssignals AS2 eine Fern-Parametrierung des elektrischen Gerätes vorgenommen werden. Eine entsprechende Fern-Parametrierung sowie das Aussenden des ersten und/oder des zweiten Aktivierungssignals AS1, AS2 kann beispielsweise mittels eines Aktivierungsgerätes erfolgen, das stationär oder mobil sein kann. So kann es sich bei einem entsprechenden Aktivierungs- beziehungsweise Fern-Parametriergerät beispielsweise um ein mobiles Handgerät handeln oder um eine Vorrichtung, die an einem Transport- oder Lagerbehälter für das elektrische Gerät beziehungsweise für eine Mehrzahl entsprechender elektrischer Geräte angebracht ist beziehungsweise angebracht werden kann.

Entsprechend den vorstehenden Ausführungen weist das erfindungsgemäße Verfahren insbesondere den Vorteil auf, dass für eine Aktivierung des elektrischen Gerätes keine besondere zusätzliche Hardware erforderlich ist. Darüber hinaus kann eine Aktivierung, gegebenenfalls verbunden mit einer Fern-Parametrierung, vorteilhafterweise für mehrere elektrische Geräte gleichzeitig oder zumindest im Wesentlichen gleichzeitig erfolgen. Darüber hinaus ist als Vorteil anzusehen, dass die Aktivierung des elektrischen Gerätes auch bereits für noch verpackte elektrische Geräte durchgeführt werden kann.

Sofern die Zeitfenster, in denen das elektrische Gerät für das erste Aktivierungssignal AS1 empfangsbereit ist, durch von dem elektrischen Gerät in regelmäßigen zeitlichen Abständen ausgesendete Heartbeat-Telegramme angezeigt werden, so können die entsprechenden Heartbeat-Telegramm darüber hinaus vorteilhafterweise zusätzlich dafür verwendet werden, bei einer Lagerung des elektrischen Gerätes bzw. einer Vielzahl entsprechender elektrischer Geräte jederzeit die Vollständigkeit des Bestandes sowie die prinzipielle Einsatzbereitschaft der elektrischen Geräte zu überwachen und sicherzustellen.

## Patentansprüche

1. Verfahren zum Aktivieren eines elektrischen Gerätes, wobei
- von dem elektrischen Gerät innerhalb eines in einem ersten Zeitabstand (ZA1) regelmäßig wiederkehrenden Zeitfensters (ZF), in dem das elektrische Gerät empfangsbereit ist, über eine Funkschnittstelle ein erstes Aktivierungssignal (AS1) empfangen wird,
- auf das erste Aktivierungssignal (AS1) hin der zeitliche Abstand der Zeitfenster (ZF) auf einen im Vergleich zum ersten Zeitabstand (ZA1) kürzeren zweiten Zeitabstand (ZA2) eingestellt wird,
- von dem elektrischen Gerät innerhalb eines der nun in dem zweiten Zeitabstand (ZA2) regelmäßig wiederkehrenden Zeitfenster (ZF) über die Funkschnittstelle ein zweites Aktivierungssignal (AS2) empfangen wird und
- das elektrische Gerät auf das zweite Aktivierungssignal (AS2) hin aktiviert wird.

2. Verfahren nach Anspruch 1,
**dadurch gekennzeichnet, dass**
ein elektrisches Gerät in Form eines Telematikgerätes oder eines Funksensors aktiviert wird.

3. Verfahren nach Anspruch 1 oder 2,
**dadurch gekennzeichnet, dass**
mit oder nach dem Empfang des zweiten Aktivierungssignals (AS2) eine Fern-Parametrierung des elektrischen Gerätes vorgenommen wird.

4. Verfahren nach einem der vorangehenden Ansprüche,
**dadurch gekennzeichnet, dass**
die Zeitfenster (ZF), in denen das elektrische Gerät für das erste Aktivierungssignal (AS1) empfangsbereit ist, durch ein von dem elektrischen Gerät ausgesendetes Heartbeat-Telegramm angezeigt werden.

5. Verfahren nach Anspruch 4,
**dadurch gekennzeichnet, dass**
die Verfügbarkeit des elektrischen Gerätes anhand der ausgesendeten Heartbeat-Telegramme überwacht wird.

6. Elektrisches Gerät mit
- einer Funkschnittstelle zum Empfangen von Funksignalen innerhalb von in definierten Zeitabständen regelmäßig wiederkehrenden Zeitfenstern (ZF), in denen das elektrische Gerät empfangsbereit ist, und
- einer Steuereinrichtung
- zum Einstellen des zeitlichen Abstands der Zeitfenster (ZF) auf einen im Vergleich zum vorherigen ersten Zeitabstand (ZA1) kürzeren zweiten Zeitabstand (ZA2) auf ein über die Funkschnittstelle empfangenes erstes Aktivierungssignal (AS1) hin und
- zum Aktivieren des elektrischen Gerätes auf ein von dem elektrischen Gerät innerhalb eines der in dem zweiten Zeitabstand (ZA2) regelmäßig wiederkehrenden Zeitfenster (ZF) über die Funkschnittstelle empfangenes zweites Aktivierungssignal (AS2) hin.

7. Elektrisches Gerät nach Anspruch 6,
**dadurch gekennzeichnet, dass**
das elektrische Gerät ein Telematikgerät oder ein Funksensor ist.

8. Elektrisches Gerät nach einem der Ansprüche 6 oder 7,
**dadurch gekennzeichnet, dass**
das elektrische Gerät zum Durchführen einer Fern-Parametrierung vorgesehen ist.

9. Elektrisches Gerät nach einem der Ansprüche 6 bis 8,
**dadurch gekennzeichnet, dass**
das elektrische Gerät zum Aussenden eines die Zeitfenster (ZF), in denen das elektrische Gerät für das erste Aktivierungssignal (AS1) empfangsbereit ist, anzeigenden Heartbeat-Telegramms ausgebildet ist.

10. Anordnung mit zumindest einem elektrischen Gerät nach einem der Ansprüche 6 bis 9 und einem Aktivierungsgerät zum Aussenden des ersten Aktivierungssignals (AS1) und/oder des zweiten Aktivierungssignals (AS2).

11. Anordnung nach Anspruch 10,
**dadurch gekennzeichnet, dass**
eine Vorrichtung zum Überwachen der Verfügbarkeit des zumindest einen elektrischen Gerätes anhand eines durch das elektrische Gerät ausgesendeten Heartbeat-Telegramms vorgesehen ist.
